# FASCICULE DE BREVET EUROPEEN

(11) **EP 3 102 348 B1**
(45) Date de publication et mention de la délivrance du brevet: **27.12.2017**
(21) Numéro de dépôt: 14707230.0
(22) Date de dépôt: 30.01.2014
(51) Int. Cl.: B21B 27/00, C23C 2/02, C23C 2/40

(54) **PROCÉDÉ DE RÉALISATION DE PIÈCES À FAIBLE ONDULATION À PARTIR D'UNE TÔLE ÉLECTROZINGUÉE, PIÈCE ET VÉHICULE CORRESPONDANTS**
VERFAHREN ZUR HERSTELLUNG VON TEILEN MIT LEICHTER WELLUNG AUS EINEM ELEKTROLYTISCH VERZINKTEN BLEICH, ENTSPRECHENDES TEIL UND FAHRZEUG
METHOD OF PRODUCING PARTS WITH SLIGHT UNDULATION FROM AN ELECTROGALVANIZED SHEET, CORRESPONDING PART AND VEHICLE

(43) Date de publication de la demande: 14.12.2016
(73) Titulaire: ArcelorMittal, 1160 Luxembourg (LU)
(72) Inventeur: DERULE, Hervé, F-57645 Montoy Flanville (FR)
(74) Mandataire: Lavoix
(86) Numéro de dépôt international: PCT/IB2014/058666
(87) Numéro de publication internationale: WO 2015/114405

(56) Documents cités:
- EP-A1- 0 863 222
- EP-A2- 0 240 223
- JP-A- H04 285 149
- JP-A- S59 104 201

## Description

La présente invention concerne un procédé de fabrication d'une tôle comprenant un substrat dont au moins une face est revêtue par un revêtement métallique à base de zinc.

Une telle tôle est plus particulièrement destinée à la fabrication de pièces de carrosserie pour un véhicule terrestre à moteur tel qu'un véhicule automobile.

La tôle est alors découpée et déformée pour réaliser des pièces qui sont assemblées pour former la carrosserie ou caisse.

Cette caisse est ensuite revêtue par un film de peinture (ou système peinture), lequel assure un bon aspect de surface et participe, avec le revêtement métallique à base de zinc, à la protection contre la corrosion.

JP S59 104201 décrit un procédé de préparation de tôle d'acier comprenant un revêtement à base de Zn, ledit procédé comprenant une étape de laminage à froid, une étape de recuit, une étape de skin-pass, suivie d'une étape de dépôt du revêtement métallique, par exemple par électrodéposition.

Les revêtements à base de zinc des tôles présentent ce qu'on appelle une ondulation de leurs surfaces extérieures, qui ne peut actuellement être compensée que par des épaisseurs importantes de peinture, sous peine d'avoir un aspect dit de « peau d'orange » inacceptable pour des pièces de carrosserie.

L'ondulation W (waviness en anglais) de la surface extérieure d'un revêtement est une irrégularité géométrique douce, pseudopériodique, d'assez grande longueur d'onde (0,8 à 10 mm) que l'on distingue de la rugosité R qui correspond aux irrégularités géométriques de faibles longueurs d'ondes.

Dans la présente invention, la moyenne arithmétique Wa du profil d'ondulation, exprimée en µm, a été retenue pour caractériser l'ondulation de la surface extérieure d'un revêtement de tôle, et les mesures d'ondulation ont été réalisées conformément à la norme SEP 1941, 1^{ère} édition de mai 2012, avec notamment un seuil de coupure de 0,8 mm. Ces mesures sont désignées conformément à cette norme par Wa_{0,8}.

Une diminution de l'ondulation Wa_{0,8} peut permettre de réduire l'épaisseur du film de peinture utilisé pour atteindre une qualité donnée d'aspect peint ou, à épaisseur constante de film de peinture, d'améliorer la qualité de l'aspect peint.

Le but de l'invention est donc de fournir un procédé de réalisation de pièces par découpe et déformation d'une tôle, la tôle comprenant un substrat dont au moins une face a été revêtue par un revêtement métallique à base de zinc, la surface extérieure du revêtement métallique ayant une ondulation Wa_{0,8} réduite après déformation.

A cet effet, l'invention a pour objet un procédé selon la revendication 1.

Le procédé peut également comprendre les caractéristiques des revendications 2 à 9, prises isolément ou en combinaison.

L'invention a également pour objet une pièce selon la revendication 10. La pièce peut également comprendre les caractéristiques des revendications 11 à 14, prises isolément ou en combinaison.

L'invention a également pour objet un véhicule selon la revendication 15.

L'invention va être illustrée par des exemples donnés à titre indicatif, et non limitatif, et en référence à la figure annexée qui est une vue schématique en coupe illustrant la structure d'une tôle selon l'invention.

La tôle 1 comprend un substrat 3 en acier recouvert sur chacune de ses deux faces 5 par un revêtement métallique 7.

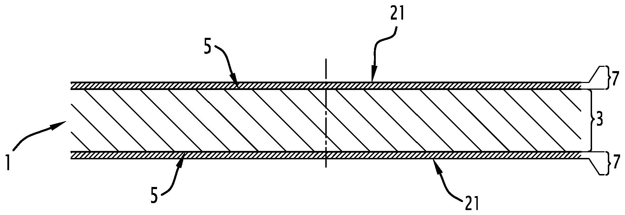

On observera que les épaisseurs relatives du substrat 3 et des différentes couches le recouvrant n'ont pas été respectées sur la figure 1 afin de faciliter la représentation.

Les revêtements 7 présents sur les deux faces 5 sont généralement analogues et un seul sera décrit en détail par la suite. En variante (non-représentée), seule une des faces 5 présente un revêtement 7.

Le revêtement 7 a généralement une épaisseur inférieure ou égale à 25 µm et vise à protéger le substrat 3 contre la corrosion.

Le revêtement 7 est à base de zinc. Il peut par exemple s'agir de zinc, ou d'un alliage de zinc, tel que du zinc-nickel ou du zinc-fer ou du zinc-cobalt, ou un composite zinc-polymère.

Pour réaliser la tôle 1, on peut par exemple procéder comme suit.

On utilise un substrat 3 sous forme d'une bande, obtenue par exemple par laminage à chaud.

On soumet d'abord le substrat 3 à une étape de laminage à froid.

De préférence, pour le laminage à froid, on commence par laminer le substrat 3 avec un taux de réduction généralement compris entre 60 et 85%, de manière à obtenir un substrat 3 d'épaisseur comprise par exemple entre 0,2 et 2 mm.

On veille à ce qu'au moins la dernière passe du laminage à froid soit réalisée avec des cylindres de travail à rugosité réduite, c'est-à-dire dont les surfaces de travail ont une rugosité Ra_{2,5}, c'est-à-dire mesurée avec un seuil de coupure à 2,5 mm, inférieure ou égale à 3,6 µm et de préférence inférieure ou égale à 3,3 µm voire 3,2 µm.

On rappelle que les cylindres de travail sont les cylindres du laminoir directement en contact du substrat 3 pour assurer sa déformation. On désigne par le terme surface de travail leurs surfaces en contact du substrat 3.

Les cylindres de travail à rugosité réduite seront présents au moins dans la ou les dernière(s) cage(s) du laminoir lorsque l'on considère le sens de défilement du substrat 3 dans le laminoir.

De préférence, les surfaces de travail seront soit non-gravées, soit gravées stochastiquement, c'est-à-dire par un procédé créant une texture stochastique. Un tel procédé peut par exemple être un procédé EDT (Electro Discharge Texturing). Les procédés EBT (Electron Beam Texturing) sont dans ce cas exclus puisque produisant une texture non-stochastique.

Dans une variante, les cylindres de travail seront des cylindres de travail dits « lisses », c'est à dire des cylindres rectifiés et non-gravés, dont les surfaces de travail ont une rugosité Ra_{2,5} inférieure ou égale à 0,5 µm voire 0,4 µm.

Les cylindres de travail à rugosité réduite disposés de part et d'autre du substrat 3 auront de préférence été réalisés par le même procédé et présenteront donc les mêmes caractéristiques.

Le substrat 3 laminé à froid peut ensuite subir un recuit réalisé de manière conventionnelle dans un four de recuit sous atmosphère appropriée, en vue de le recristalliser après l'écrouissage qu'il a subi lors de l'opération de laminage à froid.

Le recuit de recristallisation permet en outre d'activer les faces 5 du substrat 3 afin de favoriser les réactions chimiques nécessaires à l'opération ultérieure d'électrodéposition.

Selon la nuance de l'acier, le recuit de recristallisation est effectué à une température comprise entre 650 et 900°C pendant un temps nécessaire à la recristallisation de l'acier et à l'activation des faces 5.

Le substrat 3 est ensuite soumis à une opération de skin-pass pour conférer aux faces 5 une texture facilitant la mise en forme ultérieure de la tôle 1.

En effet, l'opération de skin-pass permet de transférer aux faces 5 et donc aux surfaces extérieures 21 des revêtements 7 de la tôle 1 une rugosité suffisante pour que sa mise en forme ultérieure s'effectue dans de bonnes conditions, en favorisant une bonne rétention de l'huile appliquée sur la tôle 1 avant sa mise en forme.

Le taux d'allongement du substrat 3 lors de l'opération de skin-pass est généralement compris entre 0,5 et 2%.

Dans une variante, l'opération de skin-pass sera réalisée avec des cylindres de travail EDT dont les surfaces de travail présentent une rugosité Ra_{2,5} comprise entre 1,65 et 2,95 µm et de préférence entre 1,65 et 2,30 µm.

Les revêtements 7 sont ensuite réalisés par électrodéposition. Le substrat 3 défile à cette fin dans un bain d'électrolyte.

La vitesse de défilement du substrat 3 dans le bain d'électrolyte est généralement comprise entre 20 et 200 m/mn.

L'électrolyte est par exemple un électrolyte acide aqueux du type sulfate, chlorure ou chlorure-sulfate mélangés, convenant pour déposer électrolytiquement sur le substrat 3 soit une couche de zinc, soit une couche d'alliage de zinc, soit encore une couche de composite zinc-polymère.

Ainsi pour déposer un revêtement de zinc sur le substrat 3, on peut utiliser un bain d'électrolyte à base de chlorure comprenant 50 à 150 g/l de zinc sous forme de chlorure de zinc (ZnCl₂), 250 à 400 g/l de chlorure de potassium (KCI) et présentant un pH compris entre 4 et 5. Le bain peut également comprendre des additifs comme par exemple des affineurs de grains à une concentration comprise entre 1 et 1,5 ml/l. Pour déposer la couche de zinc sur le substrat 3, on ajuste de préférence la densité de courant à une valeur comprise entre 30 et 150 A/dm², et la température du bain à une valeur comprise entre 40 et 80°C, et de préférence inférieure à 60°C pour limiter l'évaporation du bain.

On peut également utiliser un bain d'électrolyte à base de sulfate comprenant 50 à 150 g/l de zinc sous forme de sulfate de zinc (ZnSO₄), et présentant un pH inférieur à 5. Le bain peut également comprendre des additifs comme par exemple du NaCO₃. De préférence, on ajuste la densité de courant à une valeur comprise entre 10 et 150 A/dm², et la température du bain à une valeur comprise entre 40 et 80°C, et de préférence inférieure à 60°C pour limiter l'évaporation du bain.

Si l'on souhaite déposer un revêtement d'alliage de zinc, tel que zinc-nickel, zinc-fer ou zinc-cobalt, on ajoute au bain d'électrolyte à base de sulfate, de chlorure ou sulfate-chlorure mélangés précédemment décrit, des ions nickel, des ions fer ou des ions cobalt.

De même, pour déposer un revêtement composite zinc-polymère, on ajoute au bain d'électrolyte à base de sulfate, de chlorure ou de sulfate-chlorure mélangés précédemment décrit, 0,1 à 2% en poids d'un polymère tel que par exemple un polyéthylène glycol ou un polyacrylamide. Le revêtement composite obtenu confère une excellente tenue à la corrosion et permet en outre d'éviter les traitements toxiques de chromatation ou de phosphatation nécessaires à l'accrochage de peinture.

Les surfaces 21 des revêtements 7 obtenus auront, de préférence, des rugosités Ra_{2,5} comprises entre 0,9 et 1,8 µm et de préférence encore entre 0,9 et 1,5 µm.

La tôle 1 ainsi obtenue peut ensuite être découpée puis mise en forme, par exemple par emboutissage, pliage ou profilage, pour former des pièces que l'on peut ensuite mettre en peinture pour former, sur chaque revêtement 7, un film de peinture (ou système peinture) non-représenté.

Dans le cas des pièces pour les appareils électroménagers, on peut aussi soumettre éventuellement les films de peinture à un recuit par des moyens physiques et/ou chimiques, connus en eux-mêmes.

A cet effet, on peut faire passer la pièce peinte au travers d'un four à air chaud ou à induction, ou encore sous des lampes UV ou sous un dispositif diffusant des faisceaux d'électrons.

Après déformation, les surfaces extérieures 21 des revêtements 7 de la pièce ont une ondulation Wa_{0,8} inférieure ou égale à 0,50µm, de préférence inférieure ou égale à 0,45µm, de préférence encore inférieure ou égale à 0,40 µm voire 0,35 µm.

L'utilisation de cylindres de travail à rugosité Ra_{2,5} réduite au moins pour la dernière passe du laminage à froid permet de mieux contrôler l'ondulation Wa_{0,8} d'une part de la tôle 1 obtenue ultérieurement par revêtement du substrat 3 et d'autre part des pièces que l'on peut produire en découpant et en déformant la tôle 1.

En particulier, un tel laminage à froid permet de réduire l'ondulation Wa_{0,8} par rapport à un laminage ne faisant appel qu'à des cylindres à plus forte rugosité.

Ainsi, l'utilisation de cylindres de travail de rugosité Ra_{2,5} inférieure ou égale à 3,6 µm permet d'atteindre une ondulation Wa_{0,8} inférieure ou égale à 0,50 µm après l'étape de dépôt de revêtement ou après une éventuelle étape de déformation.

L'utilisation de cylindres de travail de rugosité Ra_{2,5} inférieure ou égale à 3,3 µm voire 3,2 µm permet par exemple d'atteindre une ondulation Wa_{0,8} inférieure ou égale à 0,45 µm après l'étape de dépôt de revêtement ou après une éventuelle étape de déformation.

L'utilisation de cylindres de travail lisses de rugosité Ra_{2,5} inférieure ou égale à 0,5 µm permet par exemple d'atteindre une ondulation Wa_{0,8} inférieure ou égale à 0,40 µm voire 0,35 µm après l'étape de dépôt de revêtement ou après une éventuelle étape de déformation.

Pour les applications automobiles, après phosphatation, on trempe chaque pièce dans un bain de cataphorèse, et on applique successivement, une couche de peinture d'apprêt, une couche de peinture de base, et éventuellement une couche de vernis de finition.

Avant d'appliquer la couche de cataphorèse sur la pièce, celle-ci est préalablement dégraissée puis phosphatée de manière à assurer l'adhérence de la cataphorèse.

La couche de cataphorèse assure à la pièce une protection complémentaire contre la corrosion. La couche de peinture d'apprêt, généralement appliquée au pistolet, prépare l'apparence finale de la pièce et la protège contre le gravillonnage et contre les UV. La couche de peinture de base confère à la pièce sa couleur et son apparence finale. La couche de vernis confère à la surface de la pièce une bonne résistance mécanique, une résistance contre les agents chimiques agressifs et un bon aspect de surface.

Généralement, le poids de la couche de phosphatation est compris entre 1,5 et 5 g/m².

Les films de peinture mis en oeuvre pour protéger et garantir un aspect de surface optimal aux pièces, comprennent par exemple une couche de cataphorèse de 15 à 25 µm d'épaisseur, une couche de peinture d'apprêt de 35 à 45 µm d'épaisseur, et une couche de peinture de base de 40 à 50 µm d'épaisseur.

Dans les cas où les films de peinture comprennent en outre une couche de vernis, les épaisseurs des différentes couches de peinture sont généralement les suivantes :
couche de cataphorèse : entre 15 et 25µm, de préférence inférieure à 20µm,
couche de peinture d'apprêt : inférieure à 45µm,
couche de peinture de base : inférieure à 20µm, et
couche-de vernis : inférieure à 55 µm.

Les films de peinture pourront également ne pas comprendre de couche de cataphorèse, et ne comprendre qu'une couche de peinture d'apprêt et une couche de peinture de base et éventuellement une couche de vernis.

De préférence, l'épaisseur totale des films de peinture sera inférieure à 120 µm voire 100 µm.

L'invention va à présent être illustrée par des essais donnés à titre indicatif et non limitatif.

Les essais réalisés visent à montrer l'influence positive d'un laminage à froid effectué avec des cylindres de travail à rugosité Ra_{2,5} réduite, par rapport à un laminage réalisé avec des cylindres dont les surfaces de travail présentent une rugosité plus importante.

A cet effet, des substrats en acier de nuance DC-06 sont soumis à un laminage à froid pour atteindre une épaisseur de 0,8 mm, en utilisant soit des cylindres de travail gravés EDT dont les surfaces de travail présentent des rugosités Ra_{2,5} de 3,1 µm, 3,5 µm et 3,75 µm, soit des cylindres de travail lisses dont les surfaces de travail ont une rugosité Ra_{2,5} de 0,3 µm.

Après un recuit de recristallisation à 720°C, les substrats 3 sont ensuite soumis à une même opération de skin-pass réalisée avec des cylindres de travail gravés EDT, dont les surfaces de travail présentent une rugosité Ra_{2,5} de 1,85 µm.

Les substrats 3 sont ensuite revêtus de zinc par électrodéposition dans un bain d'électrolyte à base de sulfate. Les tôles ainsi obtenues sont découpées et mises en forme par déformation équi-biaxiale de 3,5% avec un outil de Marciniak.

Les valeurs d'ondulation Wa_{0,8} et de rugosité Ra_{2,5} des surfaces extérieures 21 des revêtements 7 sont relevées à l'issue de l'étape d'électrodéposition (EG) et de l'étape de déformation (DEF).

Les résultats des mesures de Wa_{0,8} et de Ra_{2,5} sont regroupés dans le tableau I. Les essais 2 à 4 correspondent à différents modes de réalisation de l'invention et sont repérés par des astérisques.

**Tableau I**

| Essais | Ra_{2,5}(µm) cylindres de travail LAF | Wa_{0,8}(µm) après EG | Ra_{2,5}(µm) après EG | Wa_{0,8}(µm) après DEF | Ra_{2,5}(µm) après DEF | Différence Wa_{0,8} après DEF et après EG |
|---|---|---|---|---|---|---|
| 1 | 3,75 | 0,47 | 1,12 | 0,55 | 1,24 | +17% |
| 2 | 3,5* | 0,49 | 1,39 | 0,47 | 1,27 | -4,1% |
| 3 | 3,1* | 0,36 | 1,27 | 0,36 | 0,96 | 0% |
| 4 | 0,3* | 0,40 | 1,05 | 0,35 | 0,86 | -13% |

On observe en particulier que l'ondulation Wa0,8 après déformation des tôles selon l'invention est proche ou inférieure au niveau d'ondulation avant déformation. Cet effet est particulièrement net pour les essais 2 et 4.

## Revendications

1. Procédé de réalisation de pièces dans une tôle (1) comprenant un substrat (3) dont au moins une face (5) est revêtue par un revêtement métallique (7) à base de zinc, le procédé comprenant au moins des étapes de :
- fourniture du substrat (3),
- laminage à froid du substrat (3), étape dans laquelle au moins la dernière passe du laminage à froid est réalisée avec des cylindres de travail dont les surfaces de travail présentent une rugosité Ra_{2,5} inférieure ou égale à 3,6 µm,
- recuit de recristallisation du substrat (3) laminé à froid,
- skin-pass du substrat (3) recuit,
- dépôt du revêtement métallique (7), sur au moins une face (5) du substrat (3) recuit, par électrodéposition pour former la tôle (1),
- découpe de la tôle (1), et
- déformation de la tôle (1) découpée pour former les pièces, la surface extérieure (21) du revêtement métallique (7) ayant une ondulation Wa_{0,8} inférieure ou égale à 0,50 µm après l'étape de déformation.

2. Procédé selon la revendication 1, dans lequel au moins la dernière passe du laminage à froid est réalisée avec des cylindres de travail dont les surfaces de travail présentent une rugosité Ra_{2,5} inférieure ou égale à 3,3 µm, de préférence inférieure ou égale à 3,2 µm.

3. Procédé selon la revendication 2, dans lequel au moins la dernière passe du laminage à froid est réalisée avec des cylindres de travail rectifiés et non gravés dont les surfaces de travail présentent une rugosité Ra_{2,5} inférieure ou égale à 0,5 µm, de préférence inférieure ou égale à 0,4 µm.

4. Procédé selon l'une des revendications précédentes, dans lequel au moins la dernière passe du laminage à froid est réalisée avec des cylindres de travail dont les surfaces de travail sont soit non-gravées, soit gravées stochastiquement.

5. Procédé selon l'une des revendications précédentes, dans lequel l'étape de skin-pass est assurée avec des cylindres de travail EDT dont les surfaces de travail présentent une rugosité Ra_{2,5} comprise entre 1,65 et 2,95 µm, de préférence comprise entre 1,65 et 2,30 µm.

6. Procédé selon l'une des revendications précédentes, le procédé comprenant une étape de mise en peinture des pièces déformées.

7. Procédé selon l'une des revendications précédentes, dans lequel la surface extérieure (21) du revêtement métallique (7) a une ondulation Wa_{0,8} inférieure ou égale à 0,45 µm après l'étape de déformation.

8. Procédé selon la revendication 7, dans lequel la surface extérieure (21) du revêtement métallique (7) a une ondulation Wa_{0,8} inférieure ou égale à 0,40 µm après l'étape de déformation.

9. Procédé selon la revendication 8, dans lequel la surface extérieure (21) du revêtement métallique (7) a une ondulation Wa_{0,8} inférieure ou égale à 0,35 µm après l'étape de déformation.

10. Pièce obtenue par déformation d'une tôle, dans laquelle la surface extérieure (21) du revêtement métallique (7) de ladite pièce a une ondulation Wa_{0,8} inférieure ou égale à 0,50 µm, ladite tôle comprenant un substrat (3) dont au moins une face (5) est revêtue par un revêtement métallique (7) à base de zinc déposé par électrodéposition.

11. Pièce selon la revendication 10, dans laquelle la surface extérieure (21) du revêtement métallique (7) a une ondulation Wa_{0,8} inférieure ou égale à 0,45 µm.

12. Pièce selon la revendication 11, dans laquelle la surface extérieure (21) du revêtement métallique (7) a une ondulation Wa_{0,8} inférieure ou égale à 0,40 µm.

13. Pièce selon la revendication 12, dans laquelle la surface extérieure (21) du revêtement métallique (7) a une ondulation Wa_{0,8} inférieure ou égale à 0,35 µm.

14. Pièce selon l'une des revendications 10 à 13, la pièce comprenant en outre un film de peinture sur le revêtement métallique (7).

15. Véhicule terrestre à moteur comprenant une carrosserie, la carrosserie comprenant une pièce selon l'une des revendications 10 à 14.

## Patentansprüche

1. Verfahren zur Herstellung von Teilen in einem Blech (1), das ein Substrat (3) umfasst, dessen mindestens eine Fläche (5) durch eine Metallbeschichtung (7) auf Zinkbasis beschichtet ist, wobei das Verfahren mindestens die Schritte umfasst:
- Bereitstellen des Substrats (3),
- Kaltwalzen des Substrats (3), ein Schritt, bei dem mindestens der letzte Kaltwalzstich mit Arbeitszylindern durchgeführt wird, deren Arbeitsflächen eine Rauheit (Ra_{2,5}) kleiner oder gleich 3,6 µm aufweist,
- Rekristallisationsglühen des kaltgewalzten Substrats (3),
- Skin-Pass des geglühten Substrats (3),
- Aufbringen der Metallbeschichtung (7) auf mindestens einer Fläche (5) des geglühten Substrats (3) durch Elektroabscheidung zur Bildung des Blechs (1),
- Schneiden des Blechs (1), und
- Verformung des geschnittenen Blechs (1) zur Bildung der Teile, wobei die Außenfläche (21) der Metallbeschichtung (7) eine Wellung Wa_{0,8} kleiner oder gleich 0,5 µm nach dem Verformschritt aufweist.

2. Verfahren nach Anspruch 1, bei dem mindestens der letzte Kaltwalzstich mit Arbeitszylindern durchgeführt wird, deren Arbeitsflächen eine Rauheit Ra_{2,5} kleiner oder gleich 3,3 µm, vorzugsweise kleiner oder gleich 3,2 µm aufweisen.

3. Verfahren nach Anspruch 2, bei dem mindestens der letzte Kaltwalzstich mit geschliffenen und nicht gravierten Arbeitszylindern durchgeführt wird, deren Arbeitsflächen eine Rauheit Ra_{2,5} kleiner oder gleich 0,5 µm, vorzugsweise kleiner oder gleich 0,4 µm aufweisen.

4. Verfahren nach einem der vorhergehenden Ansprüche, bei dem mindestens der letzte Kaltwalzstich mit Arbeitszylindern durchgeführt wird, deren Arbeitsflächen nicht graviert oder stochastisch graviert sind.

5. Verfahren nach einem der vorhergehenden Ansprüche, bei dem der Schritt des Skin-Pass mit Arbeitszylindern EDT sichergestellt wird, deren Arbeitsflächen eine Rauheit Ra_{2,5} zwischen 1,65 und 2,95 µm, vorzugsweise zwischen 1,65 und 2,30 µm aufweisen.

6. Verfahren nach einem der vorhergehenden Ansprüche, wobei das Verfahren einen Schritt des Lackierens der verformten Teile umfasst.

7. Verfahren nach einem der vorhergehenden Ansprüche, bei dem die Außenfläche (21) der Metallbeschichtung (7) eine Wellung Wa_{0,8} kleiner oder gleich 0,45 µm nach dem Verformschritt aufweist.

8. Verfahren nach Anspruch 7, bei dem die Außenfläche (21) der Metallbeschichtung (7) eine Wellung Wa_{0,8} kleiner oder gleich 0,40 µm nach dem Verformschritt aufweist.

9. Verfahren nach Anspruch 8, bei dem die Außenfläche (21) der Metallbeschichtung (7) eine Wellung Wa_{0,8} kleiner oder gleich 0,35 µm nach dem Verformschritt aufweist.

10. Teil, das durch Verformung eines Blechs erhalten wird, bei dem die Außenfläche (21) der Metallbeschichtung (7) des Teils eine Wellung Wa_{0,8} kleiner oder gleich 0,50 µm aufweist, wobei das Blech ein Substrat (3) umfasst, dessen mindestens eine Fläche (5) durch eine Metallbeschichtung (7) auf Zinkbasis beschichtet ist und durch Elektroabschneidung aufgebracht ist.

11. Teil nach Anspruch 10, bei dem die Außenfläche (21) der Metallbeschichtung (7) eine Wellung (Wa_{0,8} kleiner oder gleich 0,45 µm aufweist.

12. Teil nach Anspruch 11, bei dem die Außenfläche (21) der Metallbeschichtung (7) eine Wellung (Wa_{0,8} kleiner oder gleich 0,40 µm aufweist.

13. Teil nach Anspruch 12, bei dem die Außenfläche (21) der Metallbeschichtung (7) eine Wellung (Wa_{0,8} kleiner oder gleich 0,35 µm aufweist.

14. Teil nach einem der Ansprüche 10 bis 13, wobei das Teil außerdem eine Farbschicht auf der Metallbeschichtung (7) umfasst.

15. Motorgetriebenes Landfahrzeug, das eine Karosserie umfasst, wobei die Karosserie Teile nach einem der Ansprüche 10 bis 14 umfasst.

## Claims

1. A method for manufacturing parts made from a metal sheet (1) comprising a substrate (3) whereof at least one face (5) is coated with a zinc-based metal coating (7), the method comprising at least the following steps:
- providing the substrate (3),
- cold rolling the substrate (3), during which step at least the last cold rolling pass is done with work cylinders whose work surface have a roughness Ra_{2.5} of less than or equal to 3.6 µm,
- recrystallization annealing of the cold rolled substrate (3),
- skin-pass of the annealed substrate (3),
- deposition of the metal coating (7), on at least one face (5) of the annealed substrate (3), by electrodeposition to form the metal sheet (1),
- cutting the metal sheet (1), and
- deforming the cut metal sheet (1) to form the parts, the outer surface (21) of the metal coating (7) having a waviness Wa_{0.8} of less than or equal to 0.5 µm after the deformation step.

2. The method according to claim 1, wherein at least the last cold rolling pass is carried out with work cylinders whose work surfaces have a roughness Ra_{2.5} of less than or equal to 3.3 µm, preferably less than or equal to 3.2 µm.

3. The method according to claim 2, wherein at least the last cold rolling pass is carried out with straightened and non-etched work cylinders whose work surfaces have a roughness Ra_{2.5} of less than or equal to 0.5 µm, preferably less than or equal to 0.4 µm.

4. The method according to one of the preceding claims, wherein at least the last cold rolling pass is carried out with work cylinders whose work surfaces are either not etched, or stochastically etched.

5. The method according to one of the preceding claims, wherein the skin-pass step is performed with EDT work cylinders whose work surfaces have a roughness Ra_{2.5} comprised between 1.65 and 2.95 µm, preferably comprised between 1.65 and 2.30 µm.

6. The method according to one of the preceding claims, the method comprising a step for painting the deformed parts.

7. The method according to one of the preceding claims, wherein the outer surface (21) of the metal coating (7) has a waviness Wa_{0.8} of less than or equal to 0.45 µm after the deformation step.

8. The method according to claim 7, wherein the outer surface (21) of the metal coating (7) has a waviness Wa_{0.8} of less than or equal to 0.40 µm after the deformation step.

9. The method according to claim 8, wherein the outer surface (21) of the metal coating (7) has a waviness Wa_{0.8} of less than or equal to 0.35 µm after the deformation step.

10. A part obtained by deforming a metal sheet, wherein the outer surface (21) of the metal coating (7) of said part has a waviness Wa_{0.8} of less than or equal to 0.50 µm, said metal sheet comprising a substrate (3), at least one face (5) of which is coated by a zinc-based metal coating (7) deposited by electrodeposition.

11. The part according to claim 10, wherein the outer surface (21) of the metal coating (7) has a waviness Wa_{0.8} of less than or equal to 0.45 µm.

12. The part according to claim 11, wherein the outer surface (21) of the metal coating (7) has a waviness Wa_{0.8} of less than or equal to 0.40 µm.

13. The part according to claim 12, wherein the outer surface (21) of the metal coating (7) has a waviness Wa_{0.8} of less than or equal to 0.35 µm.

14. The part according to one of claims 10 to 13, the part further comprising a paint film on the metal coating (7).

15. A motorized land-based vehicle comprising a body, the body comprising a part according to one of claims 10 to 14.
